# EUROPÄISCHE PATENTSCHRIFT

(11) **EP 0 984 372 B1**
(45) Veröffentlichungstag und Bekanntmachung des Hinweises auf die Patenterteilung: **16.07.2008**
(21) Anmeldenummer: 98116525.1
(22) Anmeldetag: 01.09.1998
(51) Int. Cl.: G06F 17/40, G06Q 30/00

(54) **Verfahren und Vorrichtung zum manuellen Erfassen unterschiedlicher Ereignisse oder Zustände**
Method and device for manual input of various events or states
Méthode et dipositif de capture manuelle de différents événements ou états

(43) Veröffentlichungstag der Anmeldung: 08.03.2000
(73) Patentinhaber: Held, Jürgen, 8032 Zürich (CH)
(72) Erfinder: Held, Jürgen, 8032 Zürich (CH)
(74) Vertreter: Dr. Graf & Partner

(56) Entgegenhaltungen:
- EP-A- 0 404 541
- EP-A- 0 672 981
- WO-A-94/03861

## Beschreibung

Die Erfindung bezieht sich auf ein Verfahren zum manuellen Erfassen unterschiedlicher Ereignisse oder Zustände gemäss dem Oberbegriff von Anspruch 1. Die Erfindung bezieht sich weiter auf eine Datenerfassungsvorrichtung zur Durchführung des Verfahrens gemäss dem Oberbegriff von Anspruch 11.

Es ist bekannt die Natur, Abläufe in Systemen oder beispielsweise die Tätigkeiten oder das Verhalten von Lebewesen, insbesondere von Menschen zu beobachten und dabei bestimmte Ereignisse oder Zustände zu protokollieren, um die dabei gesammelten Beobachtungen nachträglich nach bestimmten Kriterien zu analysieren und systematisch auszuwerten. Insbesondere in psychologischen, soziologischen oder ergonomischen Studien werden durch Fremd- oder Selbstbeobachtung derartige Daten erfasst.

Zur Durchführung derartiger Beobachtungen werden heute vorzugsweise Rechner bzw. tragbare Computer eingesetzt. In einer bekannten Anordnung wird die Tastatur des Rechners zur Dateneingabe verwendet, in dem jeder Taste ein Kontext zugeordnet ist, und beim Beobachten eines Ereignisses durch das Drücken der entsprechenden Taste das aufgetretene Ereignis erfasst wird und vom Rechner vorzugsweise zusammen mit dem Zeitpunkt des Tastendruckes abgespeichert wird.

Ein derartiges Gerät bzw. ein derartiges Verfahren weist folgende Nachteile auf:
- Die Bedienung des Gerätes erfordert einen hohen Lern- und Trainingsaufwand, da zuerst die Bedeutung bzw. Zuordnung jeder Taste zu erlernen ist. Dieser erhebliche Lernaufwand ist besonders nachteilig, wenn zur Datenerfassung Menschen beigezogen werden, welche keine Erfahrung mit dem Umgang mit Computern aufweisen, welche relativ alt oder sehr jung sind, oder welche aus einem anderen Kulturkreis bzw. einem anderen Sprachgebiet stammen. Zudem besteht trotz des erheblichen Lernaufwandes die Gefahr von Fehleingaben.
- Die Anordnung der Tastatur bzw. die Benutzungsschnittstelle entspricht nicht den Vorstellungen bzw. dem mentalen Modell des Benutzers.
- Für unterschiedliche zu beobachtende Situationen sind gegebenenfalls unterschiedliche Anwendungsprogramme zur Datenerfassung bzw. unterschiedliche elektronischen Gerätes mit möglicherweise unterschiedlicher Tastaturbelegung erforderlich, was die Flexibilität und Bedienung erschwert.
- Insbesondere bei der Erfassung von örtlich veränderbaren Ereignissen (z.B.: Protokollieren von Bewegungen) fehlt ein Bezug zwischen dem beobachteten Raum und der Benutzungsschnittstelle des Datenerfassungssystems.

Die genannten Nachteile verursachen zudem einen erhöhten Aufwand an Zeit und Kosten.

Die Druckschrift EP 0 404 541 A2 offenbart ein Verfahren zur Berechnung der Reparaturkosten beschädigter Fahrzeuge. Dabei werden mit Hilfe eines Touchscreens beschädigte Fahrzeugteile als Objekte identifiziert, und basierend auf diesen Objekten mit Hilfe einer Datenbank, in welcher die Preise dieser Objekte gespeichert ist, eine Kostenberechnung durchgeführt.

Die Druckschrift EP 0 672 981 A1 offenbart eine Eingabevorrichtung umfassend ein berührungsempfindliches Eingabemittel, wobei die Eingabevorrichtung die Koordinaten des auf dem Eingabemittel berührten Ortes zur Verfügung stellt.

Die Druckschrift WO 94/03861 offenbart ein Verfahren zum Übertragen von Informationen aus Fragebögen in einen Computer, um damit Fragebögen schneller und zuverlässiger auszuwerten.

Aufgabe der Erfindung ist es, ein Verfahren sowie eine Vorrichtung zum manuellen Erfassen unterschiedlicher Ereignisse oder Zustände zu schaffen, welches eine einfache Bedienbarkeit aufweist.

Diese Aufgabe wird gelöst durch ein Verfahren aufweisend die Merkmale von Anspruch 1. Die Unteransprüche 2 bis 8 beziehen sich auf weitere, vorteilhafte Ausgestaltungen des erfindungsgemässen Verfahrens. Die Aufgabe wird weiter gelöst mit einer Vorrichtung aufweisend die Merkmale von Anspruch 10. Die abhängigen Ansprüche 11 bis 14 beziehen sich auf weitere, vorteilhafte Ausgestaltungen der erfindungsgemässen Vorrichtung.

Die Aufgabe wird insbesondere gelöst mit einem Verfahren zum manuellen Erfassen unterschiedlicher Ereignisse oder Zustände, dadurch gekennzeichnet, dass diese derart in mehrere Klassen unterteil werden, dass jedes Ereigniss/Zustand einer Klasse zugeordnet werden kann, dass auf einer flächigen Schablone für vorzugsweise jede Klasse ein zweidimensionales, frei gestaltetes und frei angeordnetes Objekt dargestellt wird, dass die Schablone derart bezüglich einem flächigen Eingabefeld einer Datenerfassungsvorrichtung angeordnet wird, dass beim manuellen Betätigen eines Objektes ein Eingabesignal erzeugt wird, dass ein den Eingabeort im Eingabefeld kennzeichnender Datensatz, insbesondere umfassend die Koordinaten und auch den Zeitpunkt der Betätigung, gespeichert wird, und dass nach Abschluss des manuellen Erfassens die kennzeichnenden Datensätzen ausgewertet und jedes erfasste Ereignis/Zustand einer Klasse zugeordnet wird.

In einer vorteilhaften Ausgestaltung des erfindungsgemässen Verfahrens wird die zu beobachtende und zu erfassende Situation auf einem Blatt Papier, im weiteren auch als Schablone bezeichnet, festgehalten, in dem die beobachtende Person, nachfolgend Beobachter genannt, Kontext orientierte Felder auf dem Papierblatt aufzeichnet, wobei es dem Beobachter frei überlassen ist, die graphische Gestaltung der Felder, ev. zusätzlich gekennzeichnet durch unterschiedliche Farben oder ergänzenden Text, sowie die Anordnung der Felder entsprechend den persönlichen Vorstellungen bzw. dem persönlichen mentalen Modell zu gestalten. Sobald alle kontextorientierten Felder eingezeichnet sind, wird das Papierblatt auf einem flächigen Eingabefeld einer Datenerfassungsvorrichtung befestigt, wobei das Eingabefeld beispielsweise als druckempfindliche Eingabeschnittstelle ausgestaltet ist, welche den Eingabeort in einer X- und Y-Koordinate aufzulösen und abzuspeichern erlaubt. Während dem Beobachten und Erfassen einer Tätigkeit tippt der Beobachter dem Ereignis entsprechend auf eines der selbst entworfenen Felder auf dem Papierblatt, wobei die Datenerfassungsvorrichtung die X- und Y-Koordinate und zudem den Zeitpunkt der Dateneingabe abspeichert. Die Dateneingabe erfolgt beispielsweise dadurch, dass mit einem Finger oder mit der Spitze eines Schreibers, auf das Papierblatt gedrückt wird. Nach dem Abschluss der Beobachtung werden die Daten ausgewertet, wobei jedem Feld das entsprechende Ereignis zugeordnet wird. Die erfassten Daten könnten z.B. auf einem Bildschirm dargestellt werden, in dem die X- und Y-Koordinate jeder Dateneingabe als Datenpunkt dargestellt wird, so dass auf Grund der sich ergebenden Clusterbildung sehr einfach erkennbar und während dem Auswerten bestimmbar ist, welche Datenpunkte zu welchem Feld bzw. zu welchem Ereignis gehören.

Vorteile des erfindungsgemässen Verfahrens sind beispielsweise darin zu sehen:
- dass ein Beobachter frei in der Gestaltung der Benutzerschnittstelle der Datenerfassungsvorrichtung ist;
- dass eine einfache, eindeutige und sichere Bedienung der Datenerfassungsvorrichtung möglich ist;
- dass die Daten sehr schnell in die Datenerfassungsvorrichtung eingebbar sind;
- dass Fehleingaben feststellbar sind, in dem getestet wird, ob die Koordinaten der eingegebenen Datenpunkte innerhalb des gezeichneten Felder liegt;
- dass die Datenerfassungsvorrichtung im wesentlichen ein Eingabefeld sowie ein Speichermittel umfasst und daher mit geringem Gewicht und geringer äusserer Abmessung herstellbar ist;
- dass das Verfahren in einfacher Art und Weise an verschiedene Aufgabenstellungen der Datenerfassung anpassbar ist.

Die Eingabeschnittstelle ist als flächiges Eingabefeld ausgestaltet, welches den Eingabeort im Eingabefeld zu detektieren erlaubt. Der Eingabeort wird als kennzeichnender Datensatz abgespeichert, wobei dieser Datensatz die Koordinaten der Eingabe und vorzugsweise den Zeitpunkt der Eingabe umfasst. Das Eingabefeld lässt sich unter Verwendung unterschiedlichster Technologien realisieren. So kann das Eingabefeld beispielsweise als eine Platte aus Metall oder Kunststoff ausgestaltet sein, welche zur Eingebeerfassung mit entsprechenden Druck-, Berührungs- oder Lichtsensoren gekoppelt ist. Derartige Eingabefelder werden auch als "Touchpad" bezeichnet. Die Eingabeschnittstelle kann zudem eine Anzeigevorrichtung, insbesondere eine LCD-Anzeige umfassen, welche unterhalb des Eingabefeldes angeordnet ist. Eine derartige Eingabeschnittstelle wird auch als "Touchscreen" bezeichnet, wobei darunter jegliche Art Bildschirme bzw. Anzeigevorrichtungen zu verstehen ist, welche eine auf Annäherung, Berührung oder Druck basierende Eingabe zu detektieren erlaubten.

Die flächige Schablone kann beispielsweise auch derart ausgestaltet sein, dass sie ein beschreibbares Blatt Papier oder eine transparente, beschreibbare Folie umfasst, welche von einem festen, beispielsweise aus Karton bestehenden Rand umgeben und mit diesem fest verbunden ist. Die derart mit Rand ausgestaltete, flächige Schablone weist beispielsweise den Vorteil auf, dass, sofern die Dateneingabevorrichtung im Bereich des Eingabefeldes einen entsprechenden Anschlag aufweist, die Schablone sehr genau und reproduzierbar bezüglich dem Eingabefeld positionierbar ist.

In der vorliegenden Patentanmeldung wird unter dem Begriff "flächige Schablone" nicht nur die insbesondere papierförmig ausgestaltete Schablone verstanden, sondern auch eine Darstellung auf dem Bildschirm eines "Touchscreen". Ausgehend vom Erfindungsgedanken handelt es sich um eine äquivalente Verwendung der Schablone, sei sie nun mit Hilfe eines dünnen, beschreibbaren Trägermaterials wie Papier dargestellt, oder mit Hilfe einer elektronischen Anzeigevorrichtung wie einem LCD-Bildschirm. Ein Beobachter kann äquivalent zur Schablone bestehend aus Papier, in einem ersten Schritt auf einem Touchscreen Kontext orientierte Felder einzeichnen und graphisch gestalten, wobei die Darstellung über den LCD-Bildschirm erfolgt, um in einem nachfolgenden Schritt die Daten durch Berühren dieser definierten Felder zu erfassen.

Das erfindungsgemässe Verfahren erlaubt es somit einem Beobachter ein elektronisches Gerät zur Datenerfassung auf einfache Weise zu konfigurieren, die Benutzungsschnittstelle in einfacher Art und Weise selbst zu gestalten oder abzuändern und somit ein für ihn selbstverständliches Eingabesystem zu gestaltet, welches einfach, eindeutig und sicher zu bedienen ist, eine schnelle Erfassung von Daten ermöglicht und für die unterschiedlichsten Erfassungsaufgaben geeignet ist.

Die Erfindung wird nachfolgend an Hand von mehreren Ausführungsbeispielen erläutert. Es zeigt:
- Fig. 1: Eine perspektivische Ansicht einer Datenerfassungsvorrichtung mit Schablone;
- Fig. 2: eine schematische Darstellung des Aufbaus der Datenerfassungsvorrichtung;
- Fig. 3: ein Beispiel einer zu beobachtenden Tätigkeit;
- Fig. 4: eine Gestaltung der Benutzerschnittstelle bzw. der Schablone für beobachtende Tätigkeit gemäss Fig. 3;
- Fig. 5: die Anzahl, Anordnung und Numerierung der virtuellen Felder eines Eingabefeldes;
- Fig. 6: ein Beispiel der Datenauswertung;
- Fig. 7,8: ein weiteres Beispiel mit Darstellungen von Ergebnissen der Beobachtung.

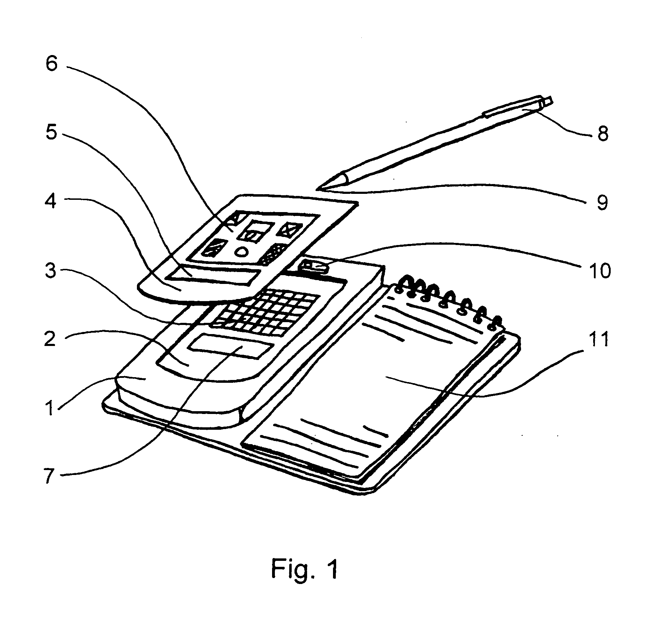

Fig. 1 zeigt ein Ausführungsbeispiel einer Datenerfassungsvorrichtung 1 mit entsprechend angepasst ausgestalteter Schablone 4. Die Datenerfassungsvorrichtung 1 weist ein flächiges, berührungsempfindliches Eingabefeld 2 auf, welches erlaubt eine Berührung bzw. Betätigung des Eingabefeldes zu detektieren und den Eingabeort in Form von Koordinaten zu speichern. Im dargestellten Ausführungsbeispiel ist dem Eingabefeld 2 eine Anzeige, in Form eines LCD-Display hinterlegt, so dass die Datenerfassungsvorrichtung 1 zudem in der Lage ist im Eingabefeld 2 eine Anzeige auszuführen. Ein derartiges Eingabefeld 2 wird auch als eine berührungsempflindiche Anzeigeoberfläche bzw. ein "Touchscreen" bezeichnet. Die Funktionsweise derartiger Geräte mit berührungsempflindlichen Anzeigeoberflächen sind aus dem Stand der Technik bekannt und werden daher nicht näher erläutert.

Oberhalb der Datenerfassungsvorrichtung 1 ist eine Schablone 4 dargestellt, welche beispielsweise aus einem 2 mm dicken Karton ausgestaltet ist, welcher zwei Ausnehmungen aufweist, ein Ein/Ausgabefeld 5 sowie ein Eingabefeld 6. Das Eingabefeld 6 der Schablone 4 besteht aus einem dünnen Material, auf dem Schriften und Zeichnungen gut aufgebracht werden können. Vorzugsweise ist dieses Material ein weisses Papier oder aber eine gut zu beschriftende, insbesondere transparente Kunststofffolie. Dieses Eingabefeld 6 bildet während dem Beobachten und Erfassen der Daten die eigentliche Benutzerschnittstelle. Das Ein-/Ausgabefeld 5 kann als eine durchgehende Aussparung oder als ein Feld aus einem dünnen, durchsichtigen Material wie beispielsweise Papier oder Kunststoff ausgestaltet sein. Das Ein-/Ausgabefeld 5 dient zur Eingabe von Steuerbefehlen oder beispielsweise zur Anzeige gewisser Statusmeldungen der Datenerfassungsvorrichtung 1, um eine Datenerfassung vorzubereiten oder abzuschliessen. Die eigentliche Erfassung der Daten während der Beobachtung erfolgt über das Eingabefeld 6.

Der Benutzer bzw. Beobachter kann vor dem Beginn der eigentlichen Datenerfassung das gesamte Eingabefeld 6 der Schablone 4 entsprechend der vorgegebenen Beobachtungsaufgabe nach seinen eigenen Vorstellungen frei gestalten. Entsprechend seinem individuellen mentalen Modell der zu beobachtenden Situation, bzw. seinen Gewohnheit und seinen persönlichen Darstellungsfähigkeiten, kann der Benutzer, wie im Eingabefeld 6 angedeutet, zur Darstellung Zeichnungen, Skizzen, Symbole, Texte, Abkürzungen, Muster und Farben verwenden.

Vorgängig der Datenerfassung hat sich der Benutzer hierzu mit den Anforderungen und der Umgebungssituation seiner Untersuchungsaufgabe vertraut gemacht. Die in diesem Prozess erworbene Orientierung kann er durch den beschriebenen Gestaltungsprozess des Eingabefeldes 6 möglichst direkt und in einer für ihn selbstverständlichen und selbsterklärenden Form ausdrücken. Das Konzept der Benutzerschnittstelle entspricht somit weitgehend dem sogenannten mentalen Model, das sich der Benutzer zur Bewältigung seiner Aufgabe zur Datenerfassung gebildet hat. Darin liegt ein wesentlicher Vorteil der Erfindung gegenüber bekannten Erfassungsvorrichtungen. Dieser Vorteil garantiert eine sichere und schnelle Bedienung und eine Reduktion der kognitiven Belastung des Benutzers, der während der Bedienung weniger umdenken muss. Ebenso entfällt die Zeitspanne, die der Benutzer benötigen würde, um sich mit einer Benutzungsschnittstelle vertraut zu machen, die nicht seinem Konzept der Bedienung entspricht. Ein weiterer Vorteil der freien Verwendung von graphischen Darstellungen, insbesondere dem Einsatz von Farben liegt darin, dass diese Möglichkeiten bei anderen Lösungen zur Datenerfassung aus Gründen der kleinen Bauform des Gerätes, des Gewichtes und der Kosten nicht gegeben sind.

Das Eingabefeld 2 der Datenerfassungsvorrichtung 1 ist leicht vertieft angeordnet und die Aussenumrandung der Schablone 4 ist entsprechend dem Verlauf der Vertiefung angepasst ausgestaltet, so dass die Schablone 4 einfach, passgenau und in ihrer Lage eindeutig definiert auf dem Eingabefeld 2 fixiert werden kann. Ein schwenkbarer Arm 10 dient zur zusätzlichen, lösbaren Fixierung der Schablone 4. Die Schablone 4 mit Eingabefeld 6 kann somit von einem Beobachter vollständig unabhängig von der Datenerfassungsvorrichtung 1 gestaltet werden, wobei die Schablone 4 nach deren Fertigstellung auf der Datenerfassungsvorrichtung 1 befestigt wird. Die noch ungestaltete, leere Schablone 4 könnte jedoch auch vorgängig bereits mit der Datnererfassungvorrichtung 1 verbunden sein, worauf das Eingabefeld 6 gestaltet wird. Eine äquivalente Ausführungsform hierzu wäre, dass die Schablone 4 nicht als separate Einheit ausgestaltet ist, sondern auf der Anzeigeoberfläche des Eingabefeldes 2 dargestellt wird, so dass, beispielsweise mit Hilfe eines Stifts 8, das Eingabefeld 6 direkt auf die Anzeigeoberfläche 2 gezeichnet wird, in dem die mit dem Stift 8 getätigten Bewegungen als Striche auf der Anzeige dargestellt werden.

Nach dem Fertigstellen der Schablone 4 wird die Datenerfassungsvorrichtung 1 in einen Erfassungsmodus umgeschaltet. Das Anwendungsprogramm zur Datenerfassung erkennt die durch Berührung des Eingabefeldes 2 erzeugten Signale des berührungsempfindlichen Eingabefeldes 2, und ist in der Lage die Koordinaten des Berührungspunktes abzuspeichern. An Stelle der Koordinaten kann das Eingabefeld 2 auch in einzelne Felder 3 unterteil sein, die vom Anwendungsprogramm unterhalb des Eingabefeldes 6 der Schablone 4 definiert werden. Diese Felder 3 werden nachfolgend als virtuelle Felder bezeichnet, da sie in ihrer Grösse und Anzahl vom besagten Anwendungsprogramm frei generiert werden können.

Jede Berührung im Eingabefeld 6 der Schablone 4 wird als Koordinate des entsprechenden Feldes 3, gegegenenfalls zusätzlich mit dem Datum und der Zeit versehen, abgespeichert.

Der Benutzer erhält auf jede seiner Eingaben in das Eingabefeld 6 eine visuelle und/oder auditive Rückmeldung seiner Eingabe. Die visuelle Rückmeldung erfolgt dabei durch das Ein-/Ausgabefeld 7 der berührungsempfindlichen Anzeigeoberfläche 2 im Bereich des Ein-/Ausgabegebietes 5 der Schablone 4.

Die Schablone 4 besitzt durch ihr Material oder ihre Herstellung oder ihre Definition Bereiche mit unterschiedlichen optischen Eigenschaften, so dass einerseits das Eingabegebiet einen guten Hintergrund zur graphischen Gestaltung liefert, andererseits aber der Ein/Ausgabebereich 7 der Rückmeldung abgelesen werden kann. Bestimmte Bereiche der berührungsempfindlichen Anzeigeoberfläche 2 können dadurch der Sicht des Benutzers verdeckt werden und somit die Aufmerksamkeit auf die wesentlichen Elemente des Eingabegebietes 6 und der Rückmeldung des Ein-/Ausgabegefeldes 7 im Ein/Ausgabegebiet 5 gelenkt werden. Ein Ausführungsbeispiel der Erfindung mit einer Schablone 2 mit Bereichen in unterschiedlichen Wandstärken ermöglicht weiterhin, dass nur im Eingabegebiet 6 durch Berührung mit dem Stift 8 ein Signal auf der berührungsempfindlichen Oberfläche 2 ausgelöst wird. Weitere denkbare Funktionen des elektronischen Erfassungsgerätes, die nicht unmittelbar mit der Datenerfassung in Verbindung stehen, können somit verdeckt und vor einer Fehlauslösung geschützt werden. Ein einfacher Aufbau der Schablone 4 ergibt sich, indem Papier unterschiedlicher Stärke verwendet wird. So bildet ein 1-2 mm starker undurchsichtiger Karton den Rahmen der Schablone 4, während das Eingabefeld aus dünnen, weissen Papier besteht, das in eine entsprechende Aussparung des Rahmens eingelegt oder eingeklebt wird. Um den Ein/Ausgabebereich 7 abzulesen kann der Karton der Schablone 4 an entsprechender Stelle ausgeschnitten sein. Ebenso ist aber auch der Einsatz einer Schablone 4 aus Kunststoff denkbar. Das Eingabegebiet 6 könnte dann mit abwaschbaren Beschriftungen und Zeichnungen gestaltet werden, wodurch die Schablone leichter umgestaltet und öfters eingesetzt werden kann.

Als lösbare Verbindung 10 ist auch eine Schablone aus Kunststoff oder Papier denkbar, die selbstklebend auf die berührungsempfindliche Anzeigeoberfläche 2 aufgebracht wird und ohne Rückstände wieder abgezogen werden kann.

Da die Schablone 4 über die lösbare Verbindung 10 leicht von Hand austauschbar ist, kann während des Erfassungsprozesses mit unterschiedlichen Schablonen auf unterschiedliche Anforderungen eingegangen werden oder aber unterschiedliche Erfassungsprozesse schnell nacheinander ausgeführt werden.

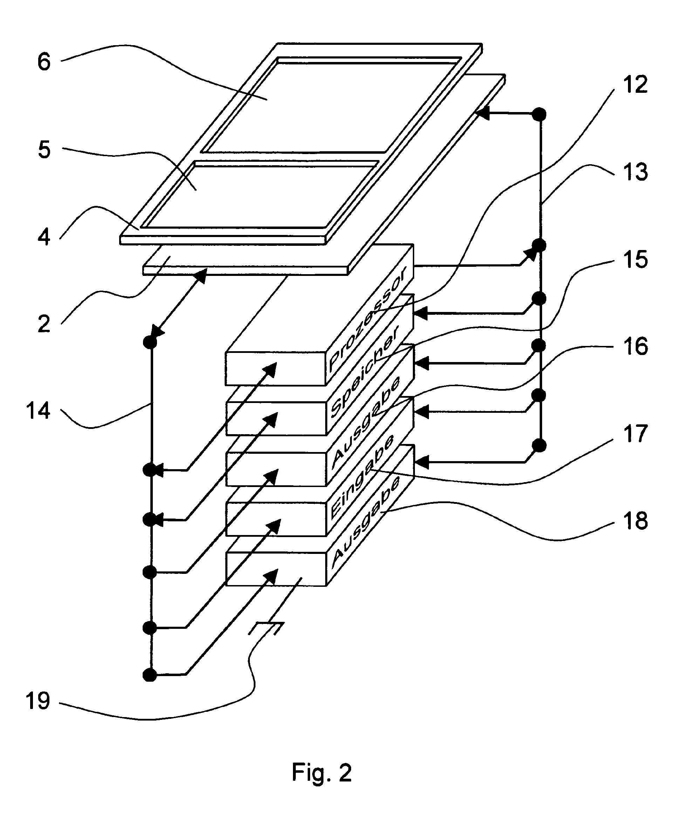

Die elektronische Datenerfassungsvorrichtung 1 besitzt eine sehr kleine Bauform mit der Möglichkeit einer seitlichen Anbringung eines Notizblockes 11. Das Gerät 1 besitzt gemäss Fig. 2 den prinzipiellen Aufbau einer elektronischen Datenverarbeitungsanlage mit den Elementen eines Prozessors 12, einer Steuerungsleitung 13 und einer Datenleitung 14. Über die Steuerungsleitung 13 und die Datenleitung 14 ist ein Speicher 15 mit dem Prozessor 12 verbunden. Dieser dient zur Speicherung der erfassten Daten, zur Speicherung des Anwendungsprogrammes zur Datenerfassung sowie zur Speicherung weiterer Programmroutinen zum Betrieb des elektronischen Gerätes 1.

Die berührungsempfindliche Eingabeoberfläche 2, eine Ausgabeeinheit zur Ausgabe auditiver Signale 16, eine zusätzliche Eingabeeinheit 17, sowie eine Ausgabeeinheit 18 zur Datenübertragung über eine Datenschnittstelle 19 an ein externes Gerät sind ebenso als elektronische Bestandteile des elektrischen Gerätes mit Daten- und Steuerleitungen an den Prozessor 12 angeschlossen.

Der Stift 8 zur Dateneingabe ist gemäss Fig. 1 mit einer ein- und ausfahrbaren Schreibmine 9 versehen. Somit kann in schneller Art und Weise zwischen der Erfassung der Daten mit eingefahrener Mine auf dem Eingabefeld 6 der Schablone 4 und dem Notieren von Daten mit ausgefahrener Schreibmine 9 auf dem Notizblock 11 gewechselt werden.

Dieser Stift 8 bildet auch ein Werkzeug zur Schrift- und Bilddarstellung auf dem Eingabefeld 6 der Schablone 4, so dass die Benutzerschnittstelle spontan während des Erfassungsprozesses ergänzt und verbessert werden kann, in dem beispielsweise ein zusätzliches Objekt eingezeichnet wird.

Eine Auswertung der im elektronischen Gerät 1 gespeicherten Daten erfolgt im elektronischen Gerät selbst oder beispielsweise auf einem grösseren Computersystem wie einem Personalcomputer.

Zu Beginn der Auswertung werden die gespeicherten Daten als Teilmengen entsprechend der erfassten Koordinaten der Eingabefelder visualisiert, so dass der Benutzer anhand des Aufbaues seiner Schablone diesen Teilmengen eine Bedeutung zuordnen kann. Die so ermöglichte Zuordnung zwischen Koordinaten der erfassten Eingabefelder, Zeitdatum und Bedeutung bilden die Grundlage der weiteren statistischen und graphischen Auswertung und Aufbereitung der erfassten Daten.

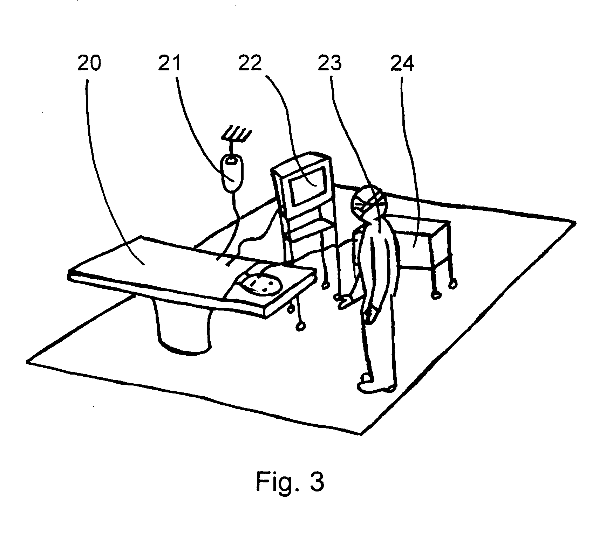

Fig. 3 bis Fig. 5 zeigen ein Beispiel einer Datenerfassung mit Hilfe des erfindungsgemässen Verfahrens. Es sollen durch Beobachtung des in Fig. 3 dargestellten Arbeitssystems Daten zu dessen ergonomischen Beurteilung erfasst werden. Fig. 3 zeigt als Beispiel eine schematische, perspektivische Darstellung eines Anästhesiearbeitsplatzes in einem Operationssaal eines Spitals. Dargestellt sind der Patient 20, eine Infusion 21, ein Monitor 22, der Anästhesiearzt 23 sowie ein Respirator 24.

Aufgabe des Beobachters soll es sein, die Tätigkeiten des Anästhesiearztes 23 in ihrem zeitlichen Ablauf zu erfassen. Nach einer kurzen Besichtigung des Arbeitsplatzes gemäss Fig. 3 und einigen Befragungen des Anästhesiearztes, wählt der Beobachter aus den vorhandenen Tätigkeitselemente als zeitlich veränderbare und für die Beobachtung wesentliche Ereignisse bzw. Zustände folgende Klassen aus:
a) Beobachten des Patienten.
b) Beobachten des Monitors.
c) Beobachten des Respirators.
d) Manipulieren am Patienten.
e) Manipulieren am Monitor.
f) Manipulieren am Respirator.
g) Kontrollieren der Infusionen.
h) Ersetzen der Infusionen.

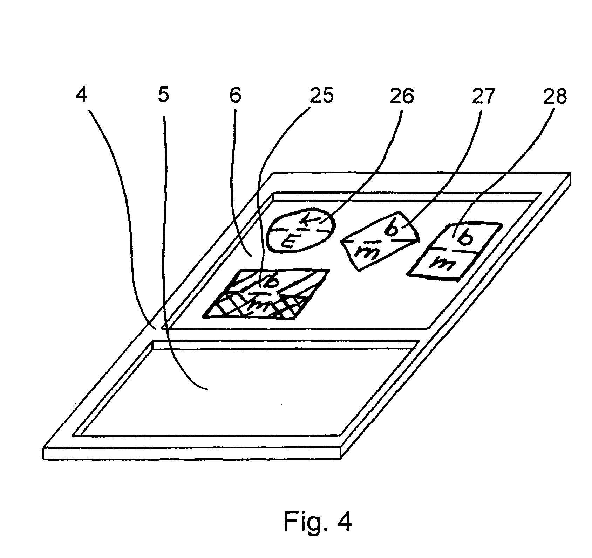

Der Beobachter gestaltet daraufhin das Eingabefeld 6 der Schablone 4 in der ihm am geeignetsten erscheinenden Darstellungsform. Der Beobachter hat im dargestellten Beispiel gemäss Fig. 4 die naheliegende Idee, alle zu erfassenden Klassen des Arbeitsplatzes derart als Objekte darzustellen, dass diese sich in ihrer räumlichen Anordnung gleich präsentieren wie dem Beobachter. Ein Vorteil dieser Anordnung ist darin zu sehen, dass nebst der Tätigkeit an sich auch die Bewegung des Anästhesiearztes im Raum erfassbar ist. Somit besteht in der späteren Auswertung die Möglichkeit die Bewegungen des Anästhesiearztes über die gespeicherten Daten nachzuzeichnen. Zusätzlich unterteilt der Beobachter die eingezeichneten Objekte Patientensymbol 25, Infusionensymbol 26, Monitorsymbol 27 und Respiratorsymbol 28 derart, dass sie jeweils zwei Klassen umfassen, wobei mit Anfangsbuchstaben b eine beobachtende Tätigkeit und mit dem Anfangsbuchstaben M eine manipulierende Tätigkeit bezeichnet ist. Das derart gestaltete Eingabefeld 6 ist in Fig. 4 dargestellt, wobei zur besseren Darstellung zusätzlich noch Farben und Schraffierungen verwendet werden können.

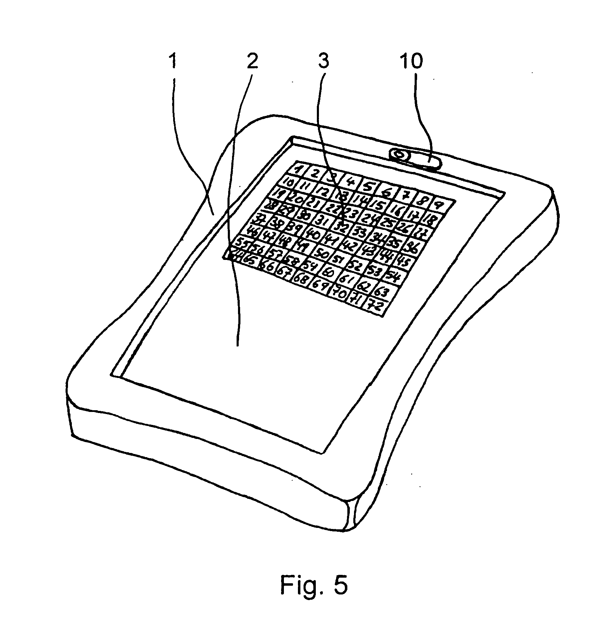

Im dargestellten Beispiel gemäss Fig. 5 weist das Eingabefeld 2 eine Matrix von 9x9 virtuellen Feldern (3) auf, welche unterhalb des Eingabefeldes 6 der Schablone 4 angeordnet sind. In der nach der Messung folgenden Auswertung würde der folgende Zusammenhang zwischen Objekt bzw. betätigtem Feld und den entsprechenden Klassen bestehen, wie dies in Tab. 1 dargestellt ist:

**Tabelle 1**

| | |
|---|---|
| Nummer(n) der Felder(3) | Bedeutungsgehalt der Klasse |
| 28, 29, 30, 31 | beobachten des Patienten |
| 37, 38, 39, 40 | manipulieren des Patienten |
| 11,12 | kontrollieren der Infusionen |
| 20, 21 | ersetzen der Infusionen |
| 14, 15 | beobachten des Monitor |
| 22, 23 | manipulieren des Monitors |
| 25, 26 | beobachten des Respirators |
| 34, 35 | manipulieren des Respirators |

Die bisher beschriebenen Benutzeraktivitäten der Gestaltung des Eingabefeldes 6 und der Definition der in Tabelle 1 dargestellten Klassen bzw. Zuordnung bilden keinen eigentlichen Mehraufwand gegenüber den bisher bekannten Verfahren zur Datenerfassung, da es sich hierbei um Überlegungen handelt, die auch bei jeden anderen Projekt zur Datenerfassung angestellt werden müssen. Letztlich ist häufig zu beobachten, dass sich die Projektbeteiligten "ein Bild" von der entsprechenden Situation machen, indem sie anhand von Skizzen sich einen besseren Überblick verschaffen. Diesem Bild entspricht aber das gestaltete Eingabefeld 6.

Zur eigentlichen Datenerfassung braucht der Beobachter nur die entsprechenden, in Fig. 4 eingezeichneten Objekte anzutippen. Zusätzliche Eingaben sind nicht erforderlich, da alle Eingaben mit dem aktuellen Zeitdatum abgespeichert werden. In vorteilhafter Weise kann er seine Aufmerksamkeit beinahe vollständig dem vom Anästhesiearzt durchgeführten Arbeitsablauf widmen. Durch die direkte Übereinstimmung der realen Situation am Arbeitsplatz mit der imaginären Vorstellung des Benutzers und der wiederum realen Abbildung dieser Vorstellung auf dem Eingabefeld 6, kann der Benutzer schnell und sicher die Daten erfassen.

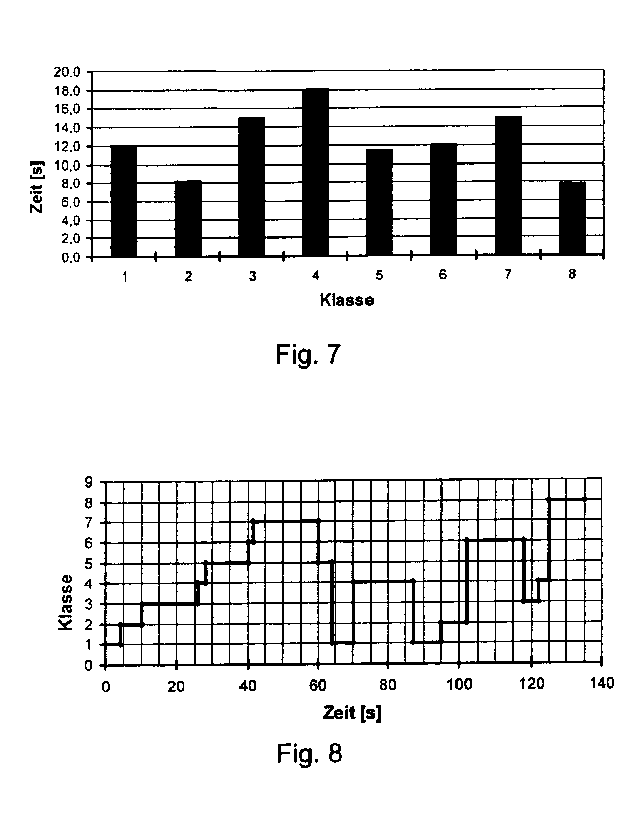

Die Speicherung der Daten erfolgt in diesem Ausführungsbeispiel in einer sequentiell strukturierten Datei. Zu Beginn dieser Datei ist eine Kennzeichnung denkbar. Das Betriebssystem der Datenerfassungsvorrichtung 1 erlaubt in Verbindung mit dem Anwendungsprogramm in dem hier ausgeführten Beispiel das Verwalten der erfassten Datenmengen unterschiedlicher Arbeitsplatzstudien oder mehrerer Studien an einem Arbeitsplatz. Ebenso wird durch dieses Betriebssystem die Datenübermittlung an externe Geräte der Datenverarbeitung ermöglicht. Fig. 7 zeigt eine beispielhafte Auswertung der erfassten Daten. Die in Fig. 4 definierten acht unterschiedlichen Klassen sind in Fig. 7 auf der Abszissenachse dargestellt, wogegen auf der Ordinatenachse die durchschnittliche Verweildauer jeder Klasse dargestellt ist. Fig. 9 zeigt ein weiteres Auswertebeispiel, in dem auf der Abszissenachse die Zeit dargestellt ist und auf der Ordinatenachse die acht unterschiedlichen Klassen, so dass aus der Darstellung gemäss Fig. 9 die zeitliche Abfolge der Klassen bzw. Tätigkeiten ersichtlich ist.

In der Datenauswertung des gewählten Ausführungsbeispiels erhält der Benutzer zunächst die Möglichkeit den erfassten Feldern die entsprechende Klasse bzw. die entsprechende Bedeutungen wieder zuzuordnen, die diese gemäss Tabelle 1 gegeben sind. Die Auswertung beruht somit auf sequentiell miteinander verknüpften und dem beobachteten Arbeitsablauf entsprechenden Zeiten und Bedeutungen und den Koordinaten der Felder 3. Da in diesem Ausführungsbeispiel ein räumlicher Bezug zwischen den Koordinaten dieser Felder und dem Arbeitsplatz besteht, ist auch eine direkte graphische Darstellung der Laufwege am Arbeitsplatz als Ergebnis der Auswertung möglich.

In einem weiteren Ausführungsbeispiel der Erfindung kann der Benutzer im Anwendungsprogramm der Datenerfassungsvorrichtung 1 in einem einmalig durchzuführenden Definitionsmodus die gestalteten Objekte seines Eingabefeldes 6 noch vor der Erfassung der Ereignisse sukzessive antippen und ihnen mit dem elektronischen Gerät 1 die entsprechende Bedeutung über Eingabe in das Ein-/Ausgabegebiet 7 zuordnen. Diese Bedeutung wird dann während der Erfassung zusätzlich zu den Koordinaten des Feldes 3 der Eingabe und des Zeitdatums abgespeichert. Damit kann die spätere Zuweisung von Bedeutungen zu den erfassten Teilmengen von Datenpunkten automatisiert werden.

In einem weiteren Ausführungsbeispiel der Erfindung können einzelne Objekte des vom Benutzer gestalteten Eingabefeldes 6 so definiert werden, dass bei ihrem Antippen auf dem Eingabefeld 6 im späteren Erfassungsprozess eine zusätzliche alphanumerische Eingabe über das Ein/Ausgabegebiet 5 der Schablone 4 möglich ist, die dann ebenfalls mit den oben genannten Datenelementen für die entsprechende Eingabe abgespeichert wird.

In einer Kombination der beiden letztgenannten Ausführungsbeispiele werden dann sowohl die Koordinaten der Felder des Eingabegebietes 3, als auch das Zeitdatum, als auch die mögliche alphanumerische Eingabe gespeichert.

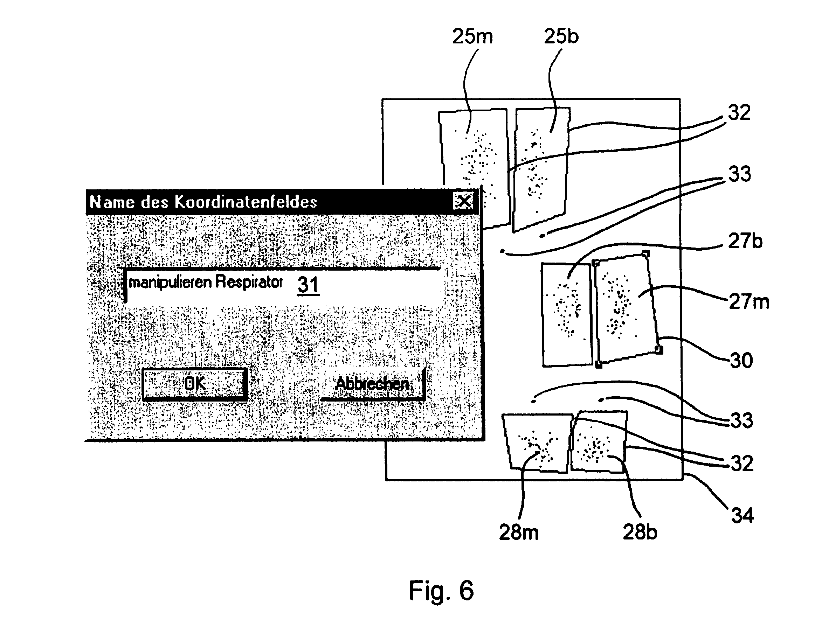

In einer weiteren Ausführung der Erfindung sind die virtuellen Felder 3 einzelne Punkte. Die auf dem Eingabegebiet 6 gezeichneten Objekte entsprechen damit Punktmengen, eine Eingabe bedeutet die Speicherung der Punktkoordinaten zusammen mit dem Zeitdatum oder anderen Datenelementen gemäss der oben erwähnten Ausführungsbeispiele. Zu Beginn der Auswertung werden in diesem Ausführungsbeispiel die gespeicherten Daten als Punktmengen entsprechend der erfassten Koordinaten der Eingabepunkte visualisiert, so dass der Benutzer diese Punktmengen anhand des Aufbaues seiner Schablone in ihrer Bedeutung identifizieren und diese für die weitere Auswertung zuordnen kann. Diese Identifikation kann vom Benutzer in einfacher Weise vorgenommen werden, in dem er beispielsweise mit Unterstützung des Auswertungsprogrammes die Gebiete der Punktmengen graphisch mit einem Rechteck, Kreis oder Polygonzug eingrenzt und den so zusammengefassten Punkten die Bedeutung zuweist, die er diesem Gebiet auch auf seinem Eingabegebiet 6 zugedacht hatte. Fig. 6 zeigt ein Beispiel einer derartigen Auswertung, wobei die Linie 34 die Begrenzung des Eingabefeldes 6 kennzeichnet. Auf dem Auswertebildschirm gemäss Fig. 6 sind die einzelnen, erfassten Datensätze als Punkte dargestellt, wobei die durch die Anordnung der Objekte auf dem Eingabefeld 6 bewirkte Clusterbildung deutlich erkennbar ist. Um die einzelnen Cluster werden während dem Auswerten interaktiv Felder gelegt, wobei in Fig. 6 gegenwärtig um den Cluster 27m ein viereckiges Feld 30 definiert wird, und die Punkte dieses Clusters der Klasse 31 "manipulieren Respirator" zugeordnet werden. Um die übrigen Cluster 25m (manipulieren des Patienten), 25b (beobachten des Patienten), 27b (beobachten des Monitors), 28m (manipulieren des Respirators), 28b (beobachten des Respirators) wurde interaktiv bereits je ein viereckiges Feld 32 gelegt, um den Datensätzen die entsprechende Klasse zuzuordnen. Innerhalb des Umrandung 34 sind vier Punkte 33 dargestellt, welche nicht den erwähnten Klassen zugeordnet werden können. Mit diesen Punkten wurde der Aufenthaltsort des Arztes 23 erfasst. Es können natürlich eine Vielzahl derartiger, ausserhalb der Felder 32 liegender Punkte während der Beobachtung erfasst werden. Mit diesen Punkten können die Bewegungen des Arztes 23 bez. einer Person im Raum relativ genau durch Beobachtung erfasst werden.

In einer weiteren Ausführung der Erfindung kann der Benutzer die visuelle Gestaltung des Eingabefeldes 6 einscannen und dem Datensätzen während dem Auswerten optisch hinterlegen, was die Zuordnung der Datensätze zu den auf dem Eingabefeld 6 dargestellten Objekten zusätzlich erleichtert.

Die beschriebenen Ausführungsbeispiele verwenden die Schablone als separates Element. Die beschriebenen Ausführungsbeispiele sind jedoch in einem weiteren Ausführungsbeispiel der Erfindung auch mit dem Merkmal einer direkt auf der berührungsempfindlichen Anzeigeoberfläche 2 generierten Schablone als elektronische Anzeige ausführbar. Ein Austauschen der Schablone 4 sowie das Verwalten verschiedener Schablonen wird in diesem Ausführungsbeispiel vom Anwendungsprogramm des Verfahrens zur Datenerfassung ermöglicht. Für die graphische Gestaltung einer solchen Schablone 4 ist der Benutzer durch die Darstellungsmöglichkeiten der berührungsempfindlichen Anzeigeoberfläche 2 des elektronischen Gerätes 1 eingeschränkt.

In einem weiteren Ausführungsbeispiel der Erfindung besitzt die Datenerfassungsvorrichtung 1 neben der Eingabeoberfläche 2 eine weitere Eingabeeinheit 17, die eine Tastatur zur Eingabe von numerischen oder alphanumerischen Daten ist.

In einer Abwandlung des letztgenannten Ausführungsbeispieles ist die Eingabeeinheit 17 ein Schalter oder ein System von Schaltern, um das Betriebssystem des elektronischen Gerätes zu steuern. Mit diesen Schaltern könnten beispielsweise erfasste Daten gelöscht oder übertragen werden.

Bei allen beschriebenen Ausführungsbeispielen besteht für den Beobachter die vorteilhafte Option, neben der Datenerfassung mit dem elektronischen Gerät 1 zusätzliche Daten in Form von handschriftlichen Notizen oder Skizzen auf einem Notizblock 11 mit demselben Stift 8 zu erfassen. Hierzu muss der Beobachter lediglich die ein- und ausfahrbare Schreibmine 9 des Stiftes 8 betätigen.

Die Objekte im Eingabefeld 6 können den Regeln der Mengenlehre folgend auf unterschiedlichste Weise dargestellt werden, so als separate Objekte, als gegenseitig angrenzende Objekte, als sich überschneidende Objekte oder als Unter- bzw. Übermengen bildende Objekte.

Die Schablonen 4 können an Stelle der frei gestaltbaren Eingabefelder 6 auch bereits vorgegebene Felder mit dargestellten Objekten aufweisen. Derartige Schablonen können zum Beispiel auch eine Fotografie enthalten. Beispielsweise könnte zum Erfassen von körperlichen Beschwerden, beispielsweise vom Beschwerden am Kopf, eine Fotografie der Beobachtungsperson auf der Schablone 4 dargestellt sein, so dass die Person durch Selbstbeobachtung jeweils den Bereich am Kopf markieren kann, welcher Beschwerden aufweist. Zudem könnte beispielsweise auf der Anzeige 2 eine Skala zwischen 0 und 100 Einheiten dargestellt werden, in welche die Beobachtungsperson die Stärke der Beschwerden einträgt.

Das erfindungsgemässe Verfahren bzw. die erfindungsgemässe Vorrichtung könnte auch zur Erfassung von Fragebogen verwendet werden, in dem die zu beantwortenden Fragen als alphanumerischer Text oder in Form von Objekten auf der Schablone 4 bzw. auf dem als Anzeigevorrichtung ausgestalteten Eingabefeld 2 dargestellt werden, und die Fragen durch antippen der Objekte beantwortet werden.

## Patentansprüche

1. Verfahren zum manuellen Erfassen unterschiedlicher Ereignisse oder Zustände durch einen Beobachter, indem die unterschiedlichen Ereignisse oder Zustände derart in mehrere Klassen unterteilt werden, dass jedes Ereignis/Zustand einer Klasse zugeordnet werden kann, indem auf einer flächigen Schablone für vorzugsweise jede Klasse ein zweidimensionales Objekt dargestellt wird, und indem die Schablone derart bezüglich einem flächigen Eingabefeld (2) einer Datenerfassungsvorrichtung angeordnet wird, dass beim manuellen Betätigen der Schablone ein Eingabesignal erzeugt wird, **dadurch gekennzeichnet, dass** in der Datenerfassungsvorrichtung vom Eingabesignal ein den Eingabeort im Eingabefeld (2) kennzeichnender Datensatz umfassend die Koordinaten und den Zeitpunkt der Betätigung bei zum Abschluß des manuellen Erfassens, gespeichert wird, und dass und nach Abschluss des manuellen Erfassens und des Beobachtens die kennzeichnenden Datensätze ausgewertet werden, indem basierend auf den Koordinaten des Eingabeortes jedes erfasste Ereignis/Zustand einer Klasse zugeordnet wird.

2. Verfahren nach Anspruch 1, **dadurch gekennzeichnet, dass** vor dem manuellen Erfassen die Klassen festgelegt und die zugeordneten Objekte insbesondere von Hand gezeichnet auf der Schablone dargestellt werden.

3. Verfahren nach einem der vorhergehenden Ansprüche, **dadurch gekennzeichnet, dass** die Objekte entsprechend den Regeln der Mengenlehre als getrennte, gegenseitig angrenzende, sich überschneidende oder Unter- bzw. Obermengen bildende Objekte dargestellt werden.

4. Verfahren nach einem der vorhergehenden Ansprüche, **dadurch gekennzeichnet, dass** während dem manuellen Erfassen die Datenerfassungsvorrichtung derart deaktiviert wird, dass die Datenerfassung unterbrochen wird, dass ein zusätzliches Objekt auf der flächigen Schablone dargestellt wird, und dass danach die Datenerfassung wieder aktiviert wird.

5. Verfahren nach einem der vorhergehenden Ansprüche, **dadurch gekennzeichnet, dass** die Schablone auf der Anzeige eines Touchscreen dargestellt wird.

6. Verfahren nach einem der Ansprüche 1 bis 4, **dadurch gekennzeichnet, dass** die Schablone als beschreibbares Blatt ausgestaltet oder zumindest ein beschreibbares Blatt umfassend, auf dem flächigen Eingabefeld fest angeordnet wird.

7. Verfahren nach einem der vorhergehenden Ansprüche, **dadurch gekennzeichnet, dass** die kennzeichnenden Datensätze derart ausgewertet werden, dass diese als den Eingabeort im Eingabefeld (2) kennzeichnende Darstellung, insbesondere als Punkte, auf einem Bildschirm angezeigt werden, und dass die sich bildenden Cluster einer Klasse zugeordnet werden.

8. Verfahren nach einem der Ansprüche 1 bis 6, **dadurch gekennzeichnet, dass** die kennzeichnenden Datensätze derart ausgewertet werden, dass die Lage der Objekte erfasst wird, und dass die innerhalb der Objekte liegenden, kennzeichnenden Datensätze von einem Rechner automatisch einer Klasse zugeordnet werden.

9. Datenerfassungsvorrichtung zur Durchführung des Verfahrens nach einem der Ansprüche 1 bis 8, umfassend ein flächig ausgestaltetes Eingabefeld (2) mit einer Matrix von individuell erfassbaren Feldern (3), sowie umfassend ein Speichermittel, welches beim manuellen Erfassen unterschiedlicher Ereignisse oder Zustände durch einen Beobachter beim Betätigen eines Feldes (3) einen kennzeichnenden Datensatz umfassend zumindest dessen Koordinaten und den Zeitpunkt der Betätigung speichert, wobei das Speichermittel derart ausgestaltet ist, dass es die kennzeichnenden Datensätze Ereignisse durch die bis zum Abschluss des manuellen Erfassens speichert, sowie umfassend eine zum Anbringen auf dem Eingabefeld (2) bestimmte Schablone (4), wobei die Schablone eine beschreibbare Oberfläche zum manuellen Einzeichnen von unterschiedliche Klassen von Ereignissen repräsentierenden Objekten (25,26,27,29) aufweist und wobei eine Zuordnung der Ereignisse durch die kennzeichnenden Datensätzen zu Klassen erst nach Abschluß des manuellen Erfassens erfolgt

10. Datenerfassungsvorrichtung nach Anspruch 9, **dadurch gekennzeichnet, dass** das Eingabefeld (2) in Form einer Platte, insbesondere bestehend aus Kunststoff oder Metall, ausgestaltet ist, oder dass das Eingabefeld (2) als ein Touchscreen ausgestaltet ist.

11. Datenerfassungsvorrichtung nach einem der Ansprüche 9 oder 10, **dadurch gekennzeichnet, dass** das Eingabefeld (2) mehr als 1000 individuell erfassbare Felder (3) aufweist.

12. Datenerfassungsvorrichtung nach Anspruch 11, **dadurch gekennzeichnet, dass** die Schablone (4) transparent, undurchsichtig oder mit Bereichen unterschiedlicher Transparenz ausgestaltet ist, um ein Erkennen oder Verdecken des Eingabefeldes (2) zu ermöglichen.

13. Datenerfassungsvorrichtung nach Anspruch 11 oder 12, **dadurch gekennzeichnet, dass** die Schablone (4) Bereiche aufweist, welche ein Betätigen eines Feldes (3) verhindern, und Bereiche aufweist, welche ein Betätigen eines Feldes (3) zulassen.

14. Datenerfassungsvorrichtung nach einem der Ansprüche 8 bis 11, **dadurch gekennzeichnet, dass** das Eingabefeld (2) als ein Touchscreen umfassend eine Anzeigevorrichtung ausgestaltet ist, und dass durch die Anzeigevorrichtung die unterschiedliche Ereignisse repräsentierende Objekte (25,26,27,28) anzeigbar sind, wobei diese Objekte (25,26,27,28) insbesondere manuell über des Eingabefeld (2) definierbar und eingebbar sind.

## Claims

1. A method for manual recording of various events or states by an observing person, wherein the various events or states are subdivided into a plurality of classes in such a way that each event/state can be assigned to a class, wherein a two-dimensional object is represented on a template for preferably each class, wherein the template is arranged in such a way with respect to an input panel (2) of a data acquisition device that an input signal is generated upon manual actuation of the template, **characterized in that** a characterizing data record of the input signal comprising the coordinates of the input panel (2) and the instant of the actuation is stored in the data acquisition device up to the termination of the manual recording, and wherein after termination of the observation and manual recording the characterizing data records are evaluated **in that** based on the coordinates of the input panel each recorded event/ state is assigned to a class.

2. The method as claimed in claim 1, wherein before starting the manual recording, classes are defined and the respective objects are represented on the template, wherein the objects are in particular drawn by hand.

3. The method as claimed in one of the preceding claims, wherein the objects are represented in accordance with the rules of set theory as objects which are separate, mutually adjoining, mutually overlapping or forming supersets and/or subsets.

4. The method as claimed in one of the preceding claims, wherein during the manual recording the data acquisition device is deactivated in such a way that the data acquisition is interrupted, wherein an additional object is entered and represented on the template, and wherein the data acquisition is reactivated thereafter.

5. The method as claimed in one of the preceding claims, wherein the template is represented on the display of a touchscreen.

6. The method as claimed in one of claims 1 to 4, wherein the template is configured as a sheet which can be written on, or wherein the template comprising at least one sheet which can be written on, and wherein the template will be fixed on the input panel.

7. The method as claimed in one of the preceding claims, wherein the characterizing data records are evaluated in such a way that these are displayed on a display screen as a representation, in particular as points, characterizing the input site in the input panel (2), and wherein the clusters which are formed are assigned to a class.

8. The method as claimed in one of claims 1 to 6, wherein the characterizing data records are evaluated in such a way that the position of the objects is detected, and wherein the characterizing data records situated inside the objects are automatically assigned to a class by a computer.

9. A data acquisition device for carrying out the method as claimed in one of claims 1 to 8, comprising an input panel (2) of two-dimensional configuration and having a matrix of individually detectable fields (3), as well as a storage means which, during manual recording of various events or states by an observing person, upon actuation of a field (3) store a characterizing data record comprising at least the coordinates thereof and the instant of actuation, wherein the storage means are configured to store the characterizing data records up to the termination of the manual recording, and comprising a template (4) intended for fitting on the input panel (2), the template having a surface which can be written on for the purpose of manually drawing objects (25, 26, 27, 28) representing the various classes of events, and wherein the events stored in the characterizing data records are assigned to classes after termination of the manual recording.

10. The data acquisition device as claimed in claim 9, wherein the input panel (2) is configured in the form of a plate and in particular consisting of plastic or metal, or wherein the input panel (2) is configured as a touchscreen.

11. The data acquisition device as claimed in claim 9 or 10, wherein the input panel (2) has more than 1000 individually detectable fields (3).

12. The data acquisition device as claimed in claim 11, wherein the template (4) is configured as transparent, opaque or with areas of different transparency in order to permit the input panel (2) to be detected or covered.

13. The data acquisition device as claimed in claim 11 or 12, wherein the template (4) has areas which prevent actuation of a field (3) in the input panel, and has areas which permit actuation of a field (3) in the input panel.

14. The data acquisition device as claimed in one of claims 8 to 11, wherein the input panel (2) is configured as a touchscreen comprising a display device, and wherein the objects (25, 26, 27, 28) representing the various events can be displayed by the display device, it being in particular possible for these objects (25, 26, 27, 28) to be defined and input manually via the input panel (2).

## Revendications

1. Procédé de saisie manuelle de différents événements ou états par un observateur, les différents événements ou états étant subdivisés en plusieurs classes de manière que chaque événement ou état puisse être affecté à une classe, en représentant un objet bidimensionnel sur un gabarit plat pour, de préférence, chaque classe et le gabarit étant disposé par rapport à un champ d'entrée plat (2) d'un dispositif de saisie de données de manière qu'un signal d'entrée soit généré lors d'un actionnement manuel du gabarit, **caractérisé en ce que**, dans le dispositif de saisie de données, un jeu de données caractérisant l'emplacement d'entrée dans le champ d'entrée (2), qui comprend les coordonnées et l'instant de l'actionnement, est enregistré par le signal d'entrée jusqu'à la fin de la saisie manuelle et que les jeux de données caractérisants ne sont évalués qu'après la fin de la saisie manuelle et de l'observation, en associant chaque événement ou état saisi à une classe sur la base des coordonnées de l'emplacement d'entrée.

2. Procédé selon la revendication 1, **caractérisé en ce que**, avant la saisie manuelle, les classes sont définies et les objets associés sont représentés, en particulier dessinés à la main, sur le gabarit.

3. Procédé selon l'une des revendications précédentes, **caractérisé en ce que** les objets sont représentés conformément aux règles de la théorie des ensembles sous forme d'objets séparés, mutuellement adjacents, ayant une intersection ou formant des sous- ou surensembles.

4. Procédé selon l'une des revendications précédentes, **caractérisé en ce que**, pendant la saisie manuelle, le dispositif de saisie de données est désactivé de manière que la saisie de données soit interrompue, qu'un objet supplémentaire soit représenté sur le gabarit plat et qu'ensuite la saisie de données soit de nouveau activée.

5. Procédé selon l'une des revendications précédentes, **caractérisé en ce que** le gabarit est représenté sur l'affichage d'un écran tactile.

6. Procédé selon l'une des revendications 1 à 4, **caractérisé en ce que** le gabarit est réalisé sous la forme d'une feuille inscriptible ou au moins, comprenant une feuille inscriptible, disposé à un emplacement fixe sur le champ de saisie plan.

7. Procédé selon l'une des revendications précédentes, **caractérisé en ce que** les jeux de données caractérisants sont évalués de manière que ceux-ci soient affichés sur un écran sous forme de représentation caractérisant l'emplacement d'entrée dans le champ d'entrée (2), en particulier sous forme de points, et que les clusters qui se forment soient associés à une classe.

8. Procédé selon l'une des revendications 1 à 6, **caractérisé en ce que** les jeux de données caractérisants sont évalués de manière que la position des objets soit saisie et que les jeux de données caractérisants situés à l'intérieur des objets soit automatiquement associés à une classe par un calculateur.

9. Dispositif de saisie de données pour réaliser le procédé selon l'une des revendications 1 à 8, comprenant un champ d'entrée (2) de forme plate avec une matrice de champs (3) saisissables individuellement, ainsi que comprenant un moyen de mémorisation lequel, lors de la saisie manuelle de différents événements ou états par un observateur, lorsqu'un champ (3) comprenant un jeu de données caractérisant est actionné, mémorise au moins ses coordonnées et l'instant de l'actionnement, le moyen de mémorisation étant conçu de manière à mémoriser les jeux de données caractérisants jusqu'à la fin de la saisie manuelle, ainsi que comprenant un gabarit (4) destiné à être appliqué sur le champ d'entrée (2), le gabarit présentant une surface inscriptible permettant de dessiner manuellement des objets (25, 26, 27, 29) représentant différentes classes d'événements et une association des événements à des classes par les jeux de données caractérisants n'étant effectuée qu'à la fin de la saisie manuelle.

10. Dispositif de saisie de données selon la revendication 9, **caractérisé en ce que** le champ d'entrée (2) est réalisé sous la forme d'une plaque, en particulier en matière plastique ou en métal, ou que le champ d'entrée (2) est réalisé sous la forme d'un écran tactile.

11. Dispositif de saisie de données selon l'une des revendications 9 ou 10, **caractérisé en ce que** le champ d'entrée (2) présente plus de 1000 champs (3) saisissables individuellement.

12. Dispositif de saisie de données selon la revendication 11, **caractérisé en ce que** le gabarit (4) est transparent, opaque ou réalisé avec des zones de transparence différente pour permettre une perception ou un masquage du champ d'entrée (2).

13. Dispositif de saisie de données selon la revendication 11 ou 12, **caractérisé en ce que** le gabarit (4) présente des zones qui empêchent un actionnement d'un champ (3) et des zones qui autorisent un actionnement d'un champ (3).

14. Dispositif de saisie de données selon l'une des revendications 8 à 11, **caractérisé en ce que** le champ d'entrée (2) est réalisé sous la forme d'un écran tactile comprenant un dispositif d'affichage et que le dispositif d'affichage permet d'afficher des objets (25, 26, 27, 28) représentant les différents événements, ces objets (25, 26, 27, 28) pouvant être définis et entrés en particulier manuellement au moyen du champ d'entrée (2).
